# FASCICULE DE BREVET EUROPEEN

(11) **EP 0 943 826 B1**
(45) Date de publication et mention de la délivrance du brevet: **28.07.2004**
(21) Numéro de dépôt: 99400651.8
(22) Date de dépôt: 17.03.1999
(51) Int. Cl.: F16B 39/28, B60G 21/055, F16C 11/06

(54) **Dispositif d'assemblage d'une biellette de liaison dans un alésage d'une barre anti-devers de véhicule**
Verbindungsvorrichtung zwischen einer Stange und einer Bohrung des Antirollstabes eines Fahrzeuges
Device for joining a link in a bore of an antiroll bar of a vehicle

(30) Priorité: 17.03.1998 FR 9803258
(43) Date de publication de la demande: 22.09.1999
(73) Titulaire: Allevard Ressorts Automobile, 92210 Saint-Cloud (FR)
(72) Inventeur: Smyk, Georges, 62117 Brebières (FR)
(74) Mandataire: Busnel, Jean-Benoît

(56) Documents cités:
- DE-C- 343 366
- FR-A- 1 451 549
- FR-A- 2 696 512
- US-A- 2 961 253
- PATENT ABSTRACTS OF JAPAN vol. 015, no. 049 (M-1078), 6 février 1991 & JP 02 283519 A (NHK SPRING CO LTD), 21 novembre 1990
- PATENT ABSTRACTS OF JAPAN vol. 096, no. 001, 31 janvier 1996 & JP 07 237428 A (NHK SPRING CO LTD), 12 septembre 1995

## Description

La présente invention concerne un dispositif de montage d'une biellette de liaison dans un alésage d'une barre anti-devers de véhicule.

Les barres anti-devers sont des pièces réalisées en acier selon une forme générale en U de section circulaire. Elles servent à limiter l'inclinaison du véhicule dans les courbes.

Les deux branches de la barre en U sont reliées respectivement, par l'intermédiaire de biellettes de liaison, aux amortisseurs d'un même train de roues avant ou arrière.

L'amortisseur étant lié à la roue et la barre anti-devers étant liée au châssis du véhicule, la biellette est constituée d'une tige métallique comportant à chacune de ses extrémités, une rotule lui permettant ainsi de s'orienter en fonction du mouvement relatif de l'amortisseur par rapport à la barre anti-devers.

Chacune des rotules comporte en son extrémité, un embout fileté permettant la fixation de la biellette à l'amortisseur et à la barre anti-devers par l'intermédiaire d'un écrou.

Dans l'état actuel de la technique, le montage de la biellette s'effectue d'abord sur l'amortisseur puis lors de l'assemblage final sur l'extrémité de la barre anti-devers.

L'assemblage de la biellette sur l'amortisseur ne présente pas de difficultés majeures car il est possible lors du serrage de l'écrou de maintenir ladite biellette au niveau de la rotule afin d'éviter sa rotation et d'assurer ainsi le serrage de l'écrou.

A l'autre extrémité de la biellette, la liaison à la barre anti-devers nécessite aussi un maintien de la rotule pour éviter sa rotation lors du serrage de l'écrou.

Pour réaliser ce blocage en rotation de la rotule, il existe différentes solutions.

Une première solution consiste à réaliser sur la base de la rotule deux méplats destinés à coopérer avec la clé plate utilisée pour le serrage. Ceci permet d'éviter de manière sûre la rotation de la rotule mais malheureusement, étant donné l'espace restreint existant sous la carrosserie d'un véhicule, l'emploi d'une clé plate, pour maintenir la rotule lors du serrage de l'écrou, rend l'assemblage complexe et laborieux.

Une deuxième solution consiste à serrer la rotule au moyen d'un écrou à jupe, ce dernier assurant l'appui de l'embase de la rotule sur l'extrémité de la barre anti-devers dès le début du serrage de l'écrou.

Cette solution n'est pas satisfaisante car elle nécessite quand même un maintien de la rotule pour éviter sa rotation.

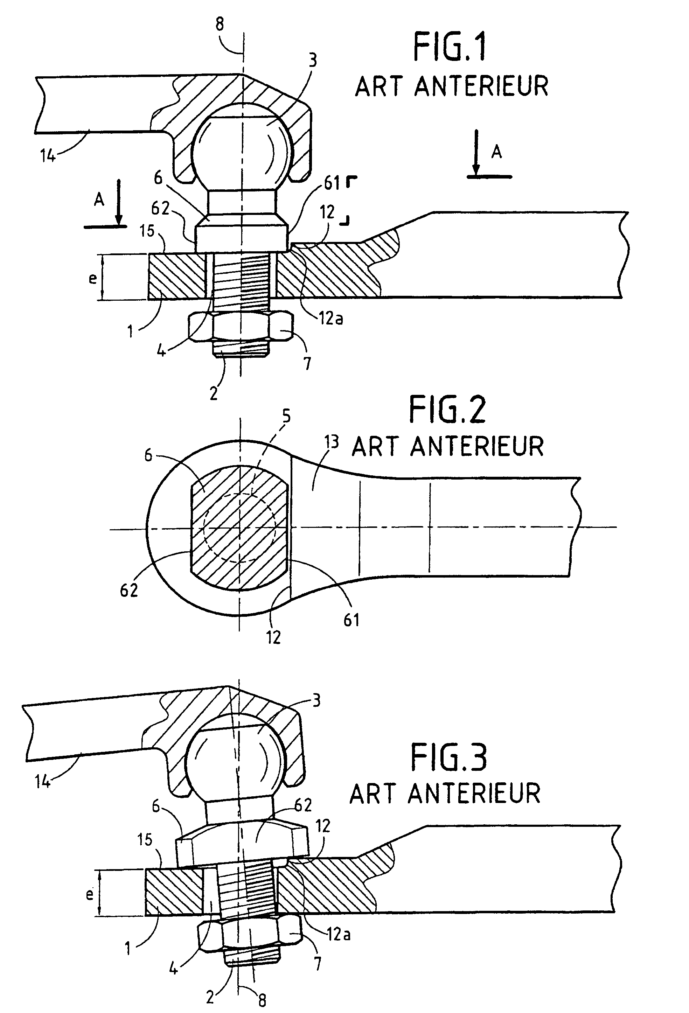

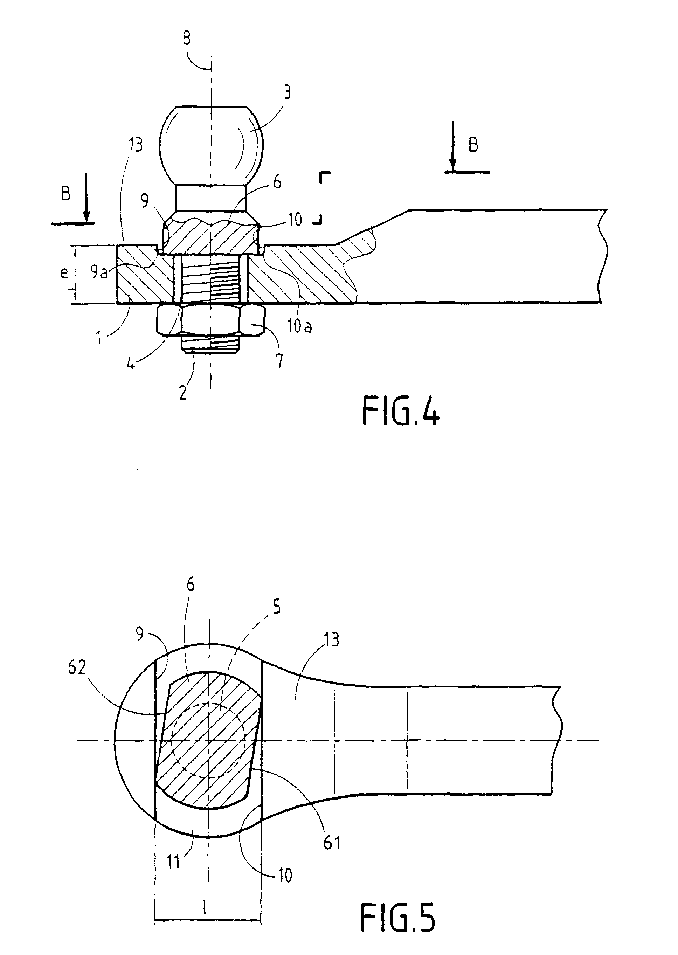

Une autre solution, représentée sur les figures 1, 2 et 3, consiste à réaliser sur les extrémités de la barre anti-devers 1, un méplat 13 pourvu d'un épaulement 12 de telle manière que chacune desdites extrémités de la barre 1 possède une épaisseur e compatible avec la longueur de l'embout fileté 2 de la rotule 3 d'une biellette 14.

Afin de loger l'embout fileté 2 de la rotule 3, la barre 1 comporte également un alésage 4 d'axe 8 dont l'une des deux extrémités 5 débouche sur la surface de support 15 de l'épaulement 12 réalisé dans ledit méplat 13.

La rotule 3 est munie d'une embase 6 qui comporte deux faces planes 61 et 62 permettant ainsi à la surface inférieure de l'embase 6 de venir en appui sur la surface de support 15 de l'épaulement 12, tandis que ladite face plane 61 de l'embase est destinée à venir en butée contre la face d'appui de l'épaulement 12.

Cette solution présente, toutefois, des inconvénients qui tiennent essentiellement en ce que le jeu entre la face d'appui de l'épaulement 12 et l'axe 8 de l'alésage 4, ainsi que le jeu entre l'embout fileté 2 de la rotule 3 et l'alésage 4 et donc le jeu entre la face plane 61 de l'embase 6 et la face d'appui de l'épaulement 12 doivent être les plus faibles possible et les plus précis possible.

Ainsi, lorsque l'épaulement 12 et l'alésage 4 sont réalisés par forgeage de la barre 1, on comprend que l'exigence de précision de ces jeux est incompatible avec ce mode de fabrication.

En outre, comme on peut le voir sur la figure 1, lorsque l'épaulement 12 et l'alésage 4 sont obtenus par forgeage, cela implique la présence de rayons de raccordement entre la surface de support 14 et la face d'appui de l'épaulement 12, ces rayons de raccordements se présentant sous la forme de congés 12a.

Ainsi, lors du serrage de l'écrou 7, un couple est appliqué sur l'embout fileté 2 qui a pour effet de faire tourner la rotule 3 autour de l'axe 8. La face 61 de l'embase 6 vient alors en appui sur les congés 12a de l'épaulement 12 qui ont tendance à la faire monter tout en provoquant l'inclinaison de l'embout fileté 2 par rapport à l'alésage 4 jusqu'à ce qu'une portion de la surface inférieure de l'embase 6 vienne en appui sur le méplat 13 de la barre 1, annulant ainsi toute efficacité du serrage et d'assemblage de la biellette 14 dans l'alésage 4 de la barre 1.

Le document FR-A-2 696 512 montre une autre solution pour réaliser le blocage en rotation de la rotule.

La présente invention a pour but de résoudre les problèmes techniques posés par l'état actuel de la technique, et mentionnés ci-dessus.

Ce but est atteint, conformément à l'invention, au moyen d'un dispositif de montage d'une biellette de liaison dans un alésage pratiqué dans un méplat défini à l'extrémité d'une barre anti-devers de véhicule, ledit dispositif comportant une rotule munie d'une embase pourvue d'un embout fileté monté dans l'alésage et ladite embase de la rotule destinée à être fixée à l'extrémité de ladite barre anti-devers comportant au moins une face plate formant butée antirotation coopérant avec un épaulement plat défini dans ledit méplat, caractérisé en ce que ledit méplat de la barre anti-devers comporte une rainure définissant deux tels épaulement plats, parallèles et dont la largeur est adaptée à l'embase pour délimiter un logement pour celle-ci, ledit alésage débouchant dans ladite rainure en sorte que ladite face plate puisse entrer en contact de butée avec un épaulement précité, en regard.

Selon une variante, ladite rainure s'étend transversalement dans le méplat de la barre anti-devers.

Selon encore une autre variante, ladite rainure s'étend longitudinalement dans le méplat de la barre anti-devers.

Selon une autre variante, l'axe de l'alésage et l'axe de la rainure sont confondus.

Selon une autre variante, les deux épaulements plans et l'alésage sont réalisés simultanément par forgeage.

Le dispositif de l'invention permet de résoudre de façon simple et efficace le problème du montage d'une biellette de liaison dans l'alésage d'une barre anti-devers sans rapporter de pièces supplémentaires et sans entraîner un quelconque risque ultérieur d'affaiblissement du serrage de la biellette sur ladite barre.

Un autre avantage réside dans le fait que le dispositif selon l'invention permet de réduire substantiellement le temps nécessaire au montage de ladite biellette sur la barre anti-devers.

L'invention sera mieux comprise à la lecture de la description qui va suivre accompagnée des dessins sur lesquels :
- la figure 1 représente une vue en coupe d'un dispositif d'assemblage conformément à l'art antérieur ;
- la figure 2 représente une vue le long de la ligne AA de la figure 1 du dispositif selon l'art antérieur ;
- la figure 3 représente une vue en coupe du dispositif selon l'art antérieur ;
- la figure 4 représente une vue en coupe du dispositif selon l'invention;
- la figure 5 représente une vue le long de la ligne BB de la figure 4 du dispositif selon l'invention.

La barre anti-devers 1 de section circulaire a un profil en U avec deux bras latéraux et un tronçon central fixé sur le châssis du véhicule au moyen de paliers (non représenté). Elle est reliée à chacune de ses extrémités aux amortisseurs d'un même train de roues avant ou arrière par l'intermédiaire de biellettes 14 articulées.

L'extrémité de la barre anti-devers 1 est pourvue d'un méplat 13 qui peut être formé, par exemple, par forgeage.

Conformément à l'invention, on réalise deux épaulements plans 9 et 10 en regard qui délimitent ainsi une rainure 11, s'étendant transversalement dans le méplat 13 de la barre anti-devers 1.

La profondeur de la rainure 11 est telle que l'épaisseur e soit toujours compatible avec la longueur de l'embout fileté 2. De plus, l'une des deux extrémités 5 de l'alésage 4 débouche dans ladite rainure.

L'embase 6 de la rotule 3 comporte deux faces 61 et 62 de profils complémentaires aux épaulements plans 9 et 10.

Par ailleurs, la rainure 11 possède une largeur L adaptée à l'embase 6 de la rotule 3 afin de délimiter un logement pour celle-ci.

Les épaulements plans 9 et 10 de la rainure 11 limitent ainsi l'angle de rotation de la rotule 3 autour de l'axe 8, à une valeur fonction du jeu existant entre les épaulements plan 9,10 de la rainure 11 et les faces 61,62 de l'embase 6.

Bien entendu, l'alésage 4 ainsi que les deux épaulements 9 et 10 peuvent être réalisés par usinage, mais également par forgeage.

En effet dans ce dernier mode de fabrication, il importe peu que le jeu entre les faces d'appui des épaulements 9 et 10 et l'axe 8 de l'alésage 4 ainsi que le jeu entre l'embout filetée 2 de la rotule 3 et l'alésage 4 soient le plus faible possible et le plus précis possible.

De même, la présence de rayons de raccordements ou de congés 9a et 10a au niveau des épaulements 9 et 10 due au mode de fabrication par forgeage est sans conséquence sur la qualité du serrage, étant donné que l'une des deux faces 61, 62 de l'embase 6 sera toujours en appui positif sur l'un des deux épaulements 9, 10.

En effet, même si l'une des faces 61 ou 62 de l'embase 6 a tendance à se soulever lors de son appui sur l'un des deux congés 9a ou 10a, l'autre face de l'embase sera toujours en appui positif et donc en butée contre l'autre épaulement.

Les deux épaulements 9 et 10 permettent donc d'éviter une inclinaison trop forte de l'embout fileté 2 dans l'alésage 4 même si le jeu existant entre ces deux derniers est important, et ils empêchent donc à la surface inférieure de l'embase 6 de venir en appui sur le méplat 13.

Ainsi, lorsque le contact de butée entre les épaulements plans 9,10 de la rainure 11 et l'embase 6 est établi, il ne peut plus y avoir de rotation de la rotule 3 autour de l'axe 8 et le couple de serrage de l'écrou 7 peut alors être appliqué.

De plus, pour améliorer l'effet anti-rotation de l'embase 6 dans la rainure 11, il est nécessaire de réaliser simultanément l'alésage 4 et la rainure 11 dont les axes seront alors confondus.

La réalisation de l'alésage 4 de la rainure 11 sera avantageusement effectuée par forgeage à chaud à l'aide d'un poinçon.

La rainure 11 peut également être réalisée longitudinalement dans le méplat 13 de la barre anti-devers.

Ainsi, la coopération des deux faces 61 et 62 de l'embase 6 avec les deux épaulements plans 9 et 10 permet d'équilibrer les efforts d'arrêt en rotation de la rotule 3 et donc de diviser par moitié ces efforts d'arrêt en rotation sur chaque face d'appui des épaulements 9 et 10, dont la hauteur peut ainsi être diminuée.

## Revendications

1. Dispositif de montage d'une biellette (14) de liaison dans un alésage (4) pratiqué dans un méplat (13) défini à l'extrémité d'une barre anti-devers (1) de véhicule, ledit dispositif comportant une rotule (3) munie d'une embase (6) pourvue d'un embout fileté (2) monté dans l'alésage (4) et ladite embase (6) de la rotule (3) destinée à être fixée à l'extrémité de ladite barre anti-devers (1) comportant au moins une face plate (61) formant butée antirotation coopérant avec un épaulement plat (10) défini dans ledit méplat (13), **caractérisé en ce que** ledit méplat (13) de la barre anti-devers (1) comporte une rainure (11) définissant deux tels épaulements plats, parallèles (9, 10) et dont la largeur est adaptée à l'embase (6) pour délimiter un logement pour celle-ci, ledit alésage (4) débouchant dans ladite rainure (11) en sorte que ladite face plate (61) puisse entrer en contact de butée avec un épaulement (9,10) précité, en regard.

2. Dispositif selon la revendication 1, **caractérisé en ce que** ladite embase (6) comporte deux faces plates (61,62) parallèles dont l'écartement correspond à la largeur (1) de ladite rainure.

3. Dispositif de montage selon la revendication 1 ou 2, **caractérisé en ce que** ladite rainure (11) s'étend transversalement dans le méplat (13) de la barre anti-devers (1).

4. Dispositif de montage selon la revendication 1 ou 2, **caractérisé en ce que** ladite rainure (11) s'étend longitudinalement dans le méplat (13) de la barre anti-devers (1).

5. Dispositif selon l'une quelconque des revendications précédentes, **caractérisé en ce que** l'axe de l'alésage (4) et l'axe de la rainure (11) sont confondus.

6. Dispositif de montage selon l'une quelconque des revendications précédentes, **caractérisé en ce que** les deux épaulements plats (9, 10) et l'alésage (4) sont réalisés simultanément par forgeage.

## Patentansprüche

1. Vorrichtung zur Montage einer Verbindungsstange (14) in einer Bohrung (4), die in einer am Ende eines Antirollstabes (1) eines Fahrzeugs definierten Abflachung (13) hergestellt ist, wobei die Vorrichtung einen Spurstangenkopf (3) aufweist, der mit einer Fußfläche (6) versehen ist, die ein in der Bohrung (4) befestigtes, mit Gewinde versehenes Ende (2) aufweist und wobei die Fußfläche (6) des Spurstangenkopfes (3) dazu bestimmt ist, am Ende des Antirollstabes (1) befestigt zu werden, der wenigstens eine flache Seite (61) aufweist, die einen Antirotationsanschlag bildet, der mit einer in der Abflachung (13) definierten, flachen Schulter (10) zusammenwirkt, **dadurch gekennzeichnet, dass** die Abflachung (13) des Antirollstabes (1) eine Rille (11) aufweist, die zwei solcher paralleler, flacher Schultern (9, 10) definiert und deren Breite an die Fußfläche (6) angepasst ist, um eine Aufnahme für diese zu begrenzen, wobei die Bohrung (4) in der Rille (11) endet, derart, dass die flache Seite (61) im Anschlag mit einer oben genannten gegenüberliegenden Schulter (9, 10) in Kontakt treten kann.

2. Vorrichtung nach Anspruch 1, **dadurch gekennzeichnet, dass** die Fußfläche (6) zwei parallele, flache Seiten (61, 62) aufweist, deren Abstand der Breite (1) der Rille entspricht.

3. Vorrichtung zur Montage nach Anspruch 1 oder 2, **dadurch gekennzeichnet, dass** die Rille (11) sich quer in der Abflachung (13) des Antirollstabes (1) erstreckt.

4. Vorrichtung zur Montage nach Anspruch 1 oder 2, **dadurch gekennzeichnet, dass** die Rille (11) sich längs in der Abflachung (13) des Antirollstabes (1) erstreckt.

5. Vorrichtung nach einem der vorhergehenden Ansprüche, **dadurch gekennzeichnet, dass** die Achse der Bohrung (4) und die Achse der Rille (11) zusammenlaufen.

6. Vorrichtung zur Montage nach einem der vorhergehenden Ansprüche, **dadurch gekennzeichnet, dass** die beiden flachen Schultern (9, 10) und die Bohrung (4) gleichzeitig durch Warmumformen hergestellt werden.

## Claims

1. Device for mounting a connecting rod (14) in a bore-hole (4) made in a flat surface (13) defined at the end of an anti-roll bar (1) of a vehicle, said device comprising a ball joint (3) provided with a base plate (6) equipped with a threaded end (2) mounted in the bore-hole (4) and said base plate (6) of the ball joint (3) intended to be fixed to the end of said anti-roll bar (1) comprising at least one flat face (61) forming an antirotation stop co-operating with a flat shoulder (10) defined in said flat surface (13), **characterised in that** said flat surface (13) of the anti-roll bar (1) comprises a groove (11) defining two such flat, parallel shoulders (9,10) and the width of which is adapted to the base plate (6) in order to delimit a housing for the latter, said bore-hole (4) opening out into said groove (11) so that said flat face (61) can come into contact with and act as a stop for an aforementioned shoulder (9, 10), facing it.

2. Device according to Claim 1, **characterised in that** said base plate (6) comprises two parallel, flat faces (61, 62), the spacing of which corresponds to the width (1) of said groove.

3. Mounting device according to Claim 1 or 2, **characterised in that** said groove (11) extends transversely into the flat surface (13) of the anti-roll bar (1).

4. Mounting device according to Claim 1 or 2, **characterised in that** said groove (11) extends longitudinally in the flat surface (13) of the anti-roll bar (1).

5. Device according to any one of the preceding claims, **characterised in that** the axis of the bore-hole (4) and the axis of the groove (11) are the same.

6. Mounting device according to any one of the preceding claims, **characterised in that** the two flat shoulders (9, 10) and the bore-hole (4) are produced simultaneously by forging.
